# FASCICULE DE BREVET EUROPEEN

(11) **EP 1 397 210 B1**
(45) Date de publication et mention de la délivrance du brevet: **19.10.2005**
(21) Numéro de dépôt: 02740838.4
(22) Date de dépôt: 28.05.2002
(51) Int. Cl.: B01J 37/02

(54) **PROCEDE DE FABRICATION DE NANOPARTICULES METALLIQUES SUPPORTEES EN LIT FLUIDISE**
VERFAHREN ZUR HERSTELLUNG VON GETRÄGERTEN METALLISCHEN NANOPARTIKELN IN EINER WIRBELSCHICHT
METHOD FOR MAKING SUPPORTED METALLIC NANOPARTICLES ON FLUIDISED BED

(30) Priorité: 30.05.2001 FR 0107020
(43) Date de publication de la demande: 17.03.2004
(73) Titulaire: CENTRE NATIONAL DE LA RECHERCHE SCIENTIFIQUE (CNRS), 75794 Paris Cedex 16 (FR)
(72) Inventeur: SALEH, Khashayar, 76100 ROUEN (FR); CORDIER, Florence, 50340 SIOUVILLE-HAGUE (FR); STEINMETZ, Daniel, F-31400 Toulouse (FR); HEMATI, Mehrdji, F-31100 Toulouse (FR); GOMEZ GALLARDO, Silvia, NL-2613 Em Delft (NL); CHAUDRET, Bruno, F-31320 Vigoulet Auzil (FR); PHILIPPOT, Karine, F-31450 Montbrun-Lauragais (FR)
(74) Mandataire: Hartmann, Jean-Luc
(86) Numéro de dépôt international: PCT/FR2002/001795
(87) Numéro de publication internationale: WO 2002/096557

(56) Documents cités:
- EP-A- 0 634 214
- DE-A- 19 824 532
- FR-A- 2 280 430
- FR-A- 2 505 205
- US-A- 4 048 092

## Description

La présente invention concerne un procédé de fabrication de nanoparticules métalliques supportées dans des grains de support poreux en lit fluidisé à basse température. Ces nanoparticules métalliques peuvent trouver des applications dans différents domaines tels que la catalyse, la microétectronique,...

Les catalyseurs supportés constitués de nanoparticules métalliques fixées sur un support sont généralement préparés par dépôt d'un sel métallique ou d'un complexe de coordination précurseur (ou d'un mélange de précurseurs) sur le support, suivi d'une étape d'activation consistant en des traitements thermiques réalisés sous air et/ou sous hydrogène. Ces procédés nécessitent plusieurs étapes successives :
(1) l'imprégnation du support poreux à partir d'une solution de complexe de coordination inorganique ou organométallique
(2) l'évaporation du solvant
(3) la décomposition thermique du complexe fixé sur le support poreux
(4) la réduction ou l'oxydation à température élevée.

Ces procédés conventionnels de préparation des catalyseurs métalliques supportés impliquent des traitements thermiques à des températures généralement élevées. On obtient alors des amas de particules métalliques dont les tailles peuvent être relativement importantes et varier dans une large gamme. De plus, la dispersion des particules métalliques sur les grains de support poreux est souvent médiocre et non homogène. Or, d'un point de vue applications catalytiques, il est établi que l'efficacité d'un catalyseur supporté est d'autant plus importante que la taille et la dispersion des particules métalliques qui le constituent sont respectivement diminuée et augmentée. De plus, ces procédés d'imprégnation classiques sont délicats à mettre en oeuvre et relativement onéreux, étant donné qu'ils impliquent plusieurs opérations successives qui nécessitent souvent des conditions drastiques de température et de pression et qui sont réalisées dans des appareils différents. Enfin, l'inconvénient majeur de ces méthodes usuelles est qu'elles peuvent être difficilement reproductibles en particulier pour ce qui concerne la taille et l'état de surface des particules métalliques difficiles à contrôler, en raison de la nécessité d'une étape d'activation, réalisée par exemple par calcination.

Une imprégnation d'un support par imprégnation classique et calcination est révélée par le brevet US-4,945,079. Dans ce document de l'alumine est utilisée comme support pour la préparation de catalyseurs à base de Ni/Mo actifs en hydrodéazotation (HDN). Ces catalyseurs ont été préparés par étapes successives (imprégnation, séchage) suivies d'une calcination à 120 à 400°C.

D'autres imprégnations réalisées par des procédés du même type sont révélées par les documents US-5,200,382, US-5,334,570, EP-0773062 et WO-99/08790. Le document FR-A-2 505 205 décrit un procédé de fabrication de catalyseurs de métaux du groupe VIII par impregnation.

Une imprégnation d'un support par imprégnation classique à partir de solutions colloïdales est par exemple décrite dans le document FR 98.10347 dans lequel des catalyseurs sont constitués de nanoparticules d'oxydes métalliques fixées sur un support (silice, alumine, magnésie,...).

Un dépôt chimique en phase vapeur (CVD) couplé à un lit fluidisé est décrit par exemple dans le document WO-95/02453. Ce document révèle une préparation de catalyseurs supportés constitués de grains de support poreux (SiO₂) sur lesquels sont dispersées des particules métalliques de rhodium. Ce procédé met en oeuvre une technique de CVD en lit fluidisé : les précurseurs organométalliques sont volatilisés en présence d'un gaz réducteur au cours de leur passage dans le lit, puis adsorbés sur les grains de support du lit fluidisé. La décomposition thermique des espèces moléculaires adsorbées permet ensuite l'obtention de particules de taille nanoscopique. Certes, la température de mise en oeuvre de ce procédé est inférieure à 200°C, température inférieure aux températures généralement employées pour les méthodes d'imprégnation classique. Cependant cette procédure est limitée par le choix du précurseur qui doit être volatile et implique la mise au point de conditions permettant son activation.

Le document US-5,935,889 décrit quant à lui l'élaboration de catalyseurs par enrobage de grains de support en lit fluidisé. Cette méthode consiste en la répétition de deux étapes successives : vaporisation d'une suspension de précurseur, puis séchage. Ainsi, une couche de précurseur d'épaisseur croissante se forme à la surface des grains. Différents traitements permettent ensuite la conversion du précurseur en catalyseur désiré.

La présente invention a pour but de fournir un procédé qui permette, en une seule étape, la préparation de nanoparticules métalliques supportées dont la taille soit inférieure à celles obtenues avec les procédés communs. La dispersion en taille des particules sera de préférence plus restreinte et la reproductibilité sera quant à elle plus élevée que pour les procédés de l'art antérieur.

Un objectif de l'invention est en particulier d'obtenir de manière reproductible des particules de taille nanométrique monodisperse, et une dispersion sur les parois des grains de support homogène.

Un autre objectif est de permettre l'obtention de matériaux de caractéristiques contrôlées (taille, état de surface/pureté chimique et dispersion des particules métalliques déposées, quantités déposées, préservation des propriétés chimiques du support).

Un autre objectif est de fournir un procédé susceptible d'être mis en oeuvre en continu de façon plus économique.

Un autre objectif est d'améliorer l'efficacité des catalyseurs potentiels obtenus par rapport à un catalyseur préparé par imprégnation classique et dont le taux de métal déposé est identique ou de réduire la quantité de métal nécessaire à efficacité égale.

A cet effet, l'invention propose un procédé de préparation de nanoparticules supportées, caractérisé en ce qu'il comporte les étapes suivantes :
- introduction dans un solvant adéquat d'un complexe de coordination métallique apte à se décomposer à une température inférieure à 200°C avec présence éventuelle d'un gaz réactif sous pression de gaz réactif inférieure à 3 bars,
- pulvérisation de la préparation ainsi obtenue dans des conditions propres à éviter sa décomposition dans un lit fluidisé contenant des grains de support poreux mis en suspension par un courant gazeux, puis
- décomposition du complexe de coordination métallique en présence éventuelle d'un gaz réactif.

Le solvant est de préférence choisi de telle sorte que le complexe de coordination métallique soit soluble dans ce solvant. La température de décomposition du complexe de coordination métallique est quant à elle avantageusement inférieure à 80°C. La décomposition est réalisée de préférence à température ambiante.

Le complexe de coordination métallique présente une liaison du métal avec un atome quelconque (soufre, carbone, etc...). Toutefois, ce procédé est particulièrement bien adapté aux complexes de coordination organométalliques présentant une liaison métal-carbone.

Dans une forme de réalisation de la présente invention, la pulvérisation de la préparation à l'intérieur du lit fluidisé est une pulvérisation pneumatique réalisée par un courant de gaz vecteur. Dans ce cas, le gaz utilisé pour la pulvérisation pneumatique est avantageusement choisi dans l'ensemble des gaz neutres (azote, argon...).

Le procédé selon l'invention permet aussi que deux complexes de coordination métallique soient introduits au départ dans un solvant pour former un alliage métallique.

Par la suite, le complexe de coordination métallique sera également appelé précurseur ou précurseur métallique.

Ainsi, le procédé de l'invention met en oeuvre une technique de pulvérisation en lit fluidisé et présente les avantages suivants :
- une mise en oeuvre du lit fluidisé à température proche de l'ambiante,
- un dépôt du précurseur métallique par voie liquide par pulvérisation d'une solution,
- une évaporation contrôlée du solvant,
- une décomposition simultanée ou consécutive du précurseur adsorbé en nanoparticules métalliques sous faible pression d'un gaz réactif (1 à 3 bars) et à une température suffisamment basse pour éviter l'agrégation non contrôlée des particules,
- un taux de métal adsorbé parfaitement régulable en fonction de la durée de l'opération.
- certaines nanoparticules métalliques supportées réalisées grâce à ce procédé se sont révélées des catalyseurs très actifs en hydrogénation du 1-hexène en hexane.

Le procédé de l'invention peut être mis en oeuvre en continu, éventuellement dans le même appareil (procédé "one-pot"). Le précurseur métallique se fixe sur les grains du support. Il subit ensuite une décomposition par action d'un gaz réactif éventuellement assistée thermiquement à température modérée conduisant aux particules métalliques qui restent fixées sur les grains, et à des composés organiques qui sont entraînés dans le courant de gaz vecteur. La température à laquelle est réalisée cette décomposition évite un affaiblissement des liaisons de fixation sur les grains au cours de la décomposition et permet la chimisorption des particules métalliques au cours de la décomposition et, en conséquence, limite le risque de migration des atomes métalliques conduisant à une agrégation des particules.

Le gaz réactif est choisi par exemple dans l'ensemble comprenant l'hydrogène (H₂) et le monoxyde de carbone (CO).

Le complexe de coordination métallique peut être choisi dans l'ensemble non exhaustif comprenant les :
tris(dibenzylidèneacétone)diplatine (o),
tris(dibenzylidèneacétone)dipalladium (o)
bis(acétylacétonate)palladium (II)
bis(1,5-cydooctadiéne)nickel (o)
bis(acétylacétonate)nickel (II)
(1,3-cyclooctènyle)(1,5-cyclooctadiène)cobalt (I)
pentacarbonyle fer(o)
(1,5-cyclooctadiéne)(1,3,5-cyclooctatriène)ruthénium (o)
(acétylacétonate)(1,5-cyclooctadiène)rhodium (I)
bis(méthoxy)bis(1,5-cyclooctadiène)diiridium (I)
(cydopentadiènyle)(tertiobutylisonitrile)cuivre (I)
bis(diméthylamidure)diétain (II)
chloro(tétrahydrothiophène)or (I)
cyclopentadiènyle indium (I).

La mise en oeuvre à température modérée est rendue possible essentiellement par le choix approprié du précurseur.

Le procédé de l'invention permet l'obtention de particules métalliques de taille nanométrique et de dispersion plus homogène. Ces résultats peuvent être expliqués par la combinaison des faibles températures utilisées et de la pression réduite au coeur du lit fluidisé. En particulier, une faible température limite la migration des atomes métalliques et donc leur tendance à s'agréger, et par conséquent diminue la taille des particules obtenues.

Le procédé de l'invention étant réalisé en une seule étape et à une température modérée, il s'avère plus aisé de mise en oeuvre que les méthodes classiques. De plus il conduit à des pertes de métal plus faibles étant donné que tout le métal contenu dans la solution de précurseur est déposé sur les grains de support. Cet avantage contribue de façon notable à la réduction des coûts en particulier lors de la fabrication de matériaux à base de métaux nobles tels que le ruthénium, le rhodium, le cobalt, le platine, le palladium, le nickel,...

Le réglage de la température et du débit du gaz vecteur sont ajustés de façon à ce que le taux massique souhaité de métal par rapport au support poreux soit atteint.

Les nanoparticules métalliques ou d'alliages sont obtenues par décomposition chimique d'un précurseur en présence d'un gaz réactif, éventuellement thermiquement assistée. Le précurseur sera un complexe de coordination inorganique ou organométallique. La liste suivante, non limitative, rassemble quelques exemples de précurseurs pouvant être utilisés :
Platine :
   [Pt₂(dba)₃] = Pt₂(C₁₇H₁₄O)₃
   dba = dibenzylidèneacétone = C₁₇H₁₄O
   Nom : tris(dibenzylidèneacétone)diplatine (o)
Palladium :
   1) [Pd₂(dba)₃] = Pd₂(C₁₇H₁₄O)₃
      dba = dibenzylidèneacétone = C₁₇H₁₄O
      Nom : tris(dibenzylidèneacétone)dipalladium (o)
   2) [Pd(acac)₂]= [Pd(C₅H₇O₂)₂]
      acac = acétylacétonate = C₅H₇O₂
      Nom : bis(acétylacétonate)palladium (II)
Nickel :
   [Ni(cod)₂] = [Ni(η⁴-C₈H₁₂)₂]
   cod = 9,5-cyclooctadiène = η⁴-C₈H₁₂
   Nom : bis(1,5-cyclooctadiène)nickel (o)
Cobalt :
   [Co(η³-C₈H₁₃)(η⁴-C₈H₁₂]
   η³-C₈H₁₃= 1,3-cyclooctényle
   η⁴-C₈H₁₂= 1,5-cyclooctadiène
   Nom : (1,3-cyclooctényle)(1,5-cyclooctadiène)cobalt (I)
Fer:
   [Fe(CO)₅]
   Nom : pentacarbonyle fer(o)
Ruthénium :
   [Ru(cod)(cot)] = [Ru(η⁴-C₈H₁₂)(η⁶-C₈H₁₀]
   cod = η⁴-C₈H₁₂= 1,5-cyclooctadiène
   cot = η⁶-C₈H₁₀= 1,3,5-cyclooctatriène
   Nom : (1,5-cyclooctadiène)(1,3,5-cyclooctatriène)ruthénium (o)
Rhodium :
   [Rh(acac)(cod)] = [Rh(C₅HTO₂)(η⁴-C₈H₁₂)]
   acac = acétylacétonate = C₅H₇O₂
   cod = η⁴-C₈H₁₂= 1,5-cyclooctadiène
   Nom : (acétylacétonate)(1,5-cyclooctadiène)rhodium (I)
Iridium :
   [Ir(OMe)(cod)]₂ = [Ir(OCH₃)(η⁴-C₈H₁₂)]₂
   OMe = OCH₃ = méthoxy
   cod = η⁴-C₈H₁₂= 1,5-cyclooctadiène
   Nom : bis(méthoxy)bis(1,5-cyclooctadiène)diiridium (I)
Cuivre :
   [CuCp(^{*t*}BuNC)] = [Cu(C₅H₅)(C₅H₉N)]₂
   Cp = C₅H₅ = cyclopentadiényle
   ^{*t*}BuNC = C₅H₉N = tertiobutylisonitrile
   Nom : (cyclopentadiènyle)(tertiobutylisonitrile)cuivre (I)
Etain:
   [Sn (NMe₂)₂]₂ = [Sn (N(CH₃)₂)₂]₂
   NMe₂ = N(CH₃)₂ = diméthylamido
   Nom : bis(diméthylamidure)diétain (II)
Or:
   [AuCl(tht)] = [AuCl(C₄H₈S)]
   tht = C₄H₈S = tétrahydrothiophène
   Nom : chloro(tétrahydrothiophène)or (I)
Indium :
   [InCp]= [In(C₅H₅)]
   Cp = C₅H₅ = cyclopentadiényle
   Nom : cyclopentadiènyle indium (I)

De tels précurseurs s'adsorbent chimiquement sur le support et se décomposent facilement dans les conditions de température et pression sus-évoquées. Les ligands qu'ils comportent sont alors libérés et éliminés dans le courant de gaz vecteur, le métal demeurant fixé au support. De la même façon, la synthèse de nanoparticules bi- ou polymétalliques sera réalisée à partir d'un mélange de complexes parmi ceux-ci.

La durée de mise en oeuvre du procédé est très inférieure à celle des procédés d'imprégnation conventionnels puisqu'il se déroule dans le même appareil (procédé "one-pot"). Dans le procédé de l'invention, la durée de mise en oeuvre est ajustable en fonction du taux massique de métal par rapport au support souhaité.

Lorsque l'installation du procédé de l'invention est étanche aux gaz et équipée d'une pompe à vide, elle permet la manipulation de précurseurs extrêmement sensibles à l'oxygène. Le gaz vecteur utilisé est de préférence constitué d'un gaz neutre, en particulier l'azote ou l'argon, mais le procédé peut également fonctionner sous air pour permettre la préparation de particules d'oxydes métalliques dans des conditions douces.

Les grains de support poreux, dont la taille est comprise de préférence entre 50 micromètres et 3 millimètres, peuvent être constitués par tout composé (généralement inerte) habituellement utilisé comme support de catalyseur : charbon actif, silice, alumine, oxyde de titane,...

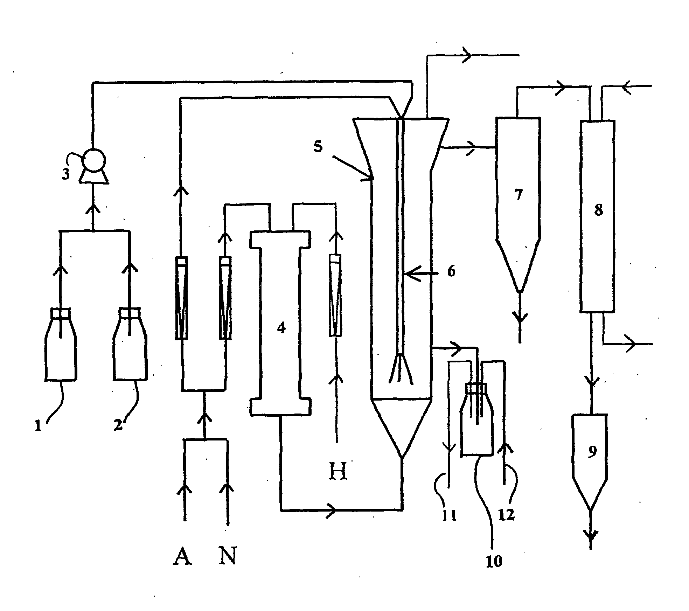

La description qui suit en référence au dessin annexé illustre le procédé de l'invention et fournit des exemples de mise en oeuvre.

Sur ce dessin, la figure unique montre un schéma d'une installation au moyen de laquelle le procédé selon l'invention peut être mis en oeuvre.

Cette installation est constituée de quatre parties distinctes : le système d'imprégnation à lit fluidisé, le système d'atomisation du liquide, le circuit de gaz et le système d'échantillonnage.

Le système d'imprégnation à lit fluidisé est constitué d'une colonne cylindrique 5 en acier inoxydable de 100 mm de diamètre interne et 500 mm de hauteur. En sortie de la colonne, les effluents gazeux traversent un cyclone 7 destiné à récupérer les fines particules de support entraînées dans le courant gazeux. La répartition de l'air à la base du lit est assurée à l'aide d'un distributeur à plaque perforée, placée en amont de la colonne.

Le système d'atomisation du liquide est disposé en amont du système d'imprégnation. Le liquide d'enrobage est placé dans deux réservoirs 1, 2, l'un 1 qui contient le solvant seul pour le démarrage de l'installation et l'autre 2 qui contient la solution de précurseur métallique. Ces deux systèmes sont reliés à une pompe péristaltique 3. La pulvérisation du liquide est assurée par un atomiseur pneumatique bi-fluide 6. Le gaz et le liquide sont mélangés à l'intérieur. L'atomiseur 6 est muni d'un clapet au niveau de l'arrivée du liquide. L'ouverture et la fermeture de ce clapet sont directement contrôlées par une électrovanne (la fermeture du clapet permet l'arrêt de l'alimentation en liquide). Ainsi, il est facile d'alterner des périodes de pulvérisation du liquide et des périodes d'arrêt de l'alimentation.

L'alimentation en gaz de la colonne et du système d'atomisation peut se faire sous air, ou en atmosphère contrôlée (azote, dihydrogène, mélange azote/dihydrogène). Le gaz de fluidisation traverse un préchauffeur constitué d'un tube chauffé par un four électrique 4. Après passage dans la colonne 5, le gaz contenant les vapeurs de solvant est condensé dans un échangeur 7.

Le système d'échantillonnage du solide est muni d'un circuit de vide 11 pour éliminer l'air dans une bouteille de prélèvement 10 et d'un circuit d'azote 12, ce qui permet de prélever à intervalles de temps réguliers des échantillons à l'abri de l'air.

La régulation en température au sein du lit fluidisé se fait par fixation d'une température de consigne au moyen d'un régulateur qui commande la puissance de chauffe du four électrique 4. Des sondes de température sont placées à différents niveaux du lit, à l'entrée du distributeur 6 et à la sortie du four 4. Des capteurs de pression différentielle à membrane (entrée du distributeur 6, partie basse et haute du réacteur 5) permettent de suivre l'évolution de la perte de charge au sein du lit.

Le procédé de l'invention peut en particulier être appliqué pour préparer un catalyseur au nickel ou au palladium dans les conditions ci-après énoncées.

On utilise comme source de nickel le bis(1,5-cyclooctadiène)nickel [Ni(η⁴-C₈H₁₂)₂]. La solution de [Ni(η⁴-C₈H₁₂)₂] dans le tétrahydrofuranne (THF) est préparée sous azote. Cette solution est ensuite pulvérisée sur les grains de support (silice microporeuse) mis en suspension par le gaz vecteur (air ou azote) dans le lit fluidisé. Après adsorption sur le support, le précurseur est décomposé. Le bis(1,5-cyclooctadiène)nickel est décomposé à 80°C pendant 5 heures.

Les précurseurs de palladium sont les complexes de coordination suivants : le palladium bis(acétylacétonate) [Pd(C₅H₇O₂)₂] et le dipalladium tris(dibenzylidèneacétone) [Pd₂(C₁₇H₁₄O)₃]. La solution de chaque précurseur dans le THF est préparée sous azote. Cette solution est ensuite pulvérisée sur les grains de support (silice microporeuse) mis en suspension par le gaz vecteur (azote) dans le lit fluidisé. Après adsorption sur le support, le précurseur est décomposé. Le palladium bis(acétylacétonate) et le dipalladium tris(dibenzylidèneacétone) sont traités sous dihydrogène à 80°C pendant 3 heures.

L'invention s'étend aux catalyseurs supportés préparés par le procédé sus-défini. Ces catalyseurs constitués de grains de support poreux sur lesquels sont dispersées des particules de métaux de transition se caractérisent en ce que les particules métalliques sont de taille nanométrique et bien dispersées sur les grains de support.

Le protocole de mise en oeuvre des exemples décrits ci-après est le suivant :

Une masse prédéfinie de précurseur métallique sous forme de poudre est introduite sous azote dans un flacon préalablement purgé à l'azote. Une quantité de solvant adéquat, préalablement distillé et dégazé, est ensuite additionnée sous azote de façon à obtenir la solution de précurseur métallique.

La colonne 5 est chargée avec une masse fixée de grains de support poreux par sa partie supérieure. La colonne 5 peut être au besoin purgée de son air par mise sous vide et balayage au gaz inerte. Après fermeture de la colonne 5, le gaz de fluidisation, à débit fixé supérieur à 2,5 fois la vitesse minimale de fluidisation des poudres est introduit à la base de la colonne en étant préalablement chauffé. Lorsque la température du lit a atteint sa valeur de consigne, le système d'atomisation est mis en route. Au début, il est alimenté en solvant pur. Puis, dès que le régime thermique est atteint, le système est alimenté avec la solution de précurseur métallique.

Au cours de l'imprégnation, des échantillons de solide sont prélevés du lit à intervalles de temps réguliers.

La décomposition .du précurseur métallique adsorbé sur le support est ensuite réalisée sous atmosphère de dihydrogène ou d'un mélange hydrogène/argon.

Les matériaux sont alors prêts à être utilisés.

### Exemple 1 : [Ni(cod)₂] = Ni(η⁴-C₈H₁₂)₂] % Ni/SiO₂ = 0,1 %

Cet exemple vise la préparation d'un matériau à 0,1 %Ni/SiO₂ à partir du précurseur Ni(η⁴-C₈H₁₂)₂]. Les grains de support sont en silice microporeuse de granulométrie 100-250 µm, de densité apparente 0,81 g/l, de densité solide 2,08g/l, de microporosité 47%, de diamètre des pores 70 angströms et de surface spécifique 300 m²/g. Le gaz vecteur est l'azote et le gaz réducteur du dihydrogène. Les différents paramètres sont ajustés comme suit :
Détails techniques :
Support :
   SiO₂
   Masse de support (g) = 257,6
   Taille des particules de support (µm) = 100-200
Précurseur métallique :
   Ni(η⁴-C₈H₁₂)₂]
   Masse de précurseur (g) = 1,4
   Solvant = THF
   Volume de solvant (ml) = 500
   Masse de solvant (g) = 440
Alimentation en solvant :
   Temps (h) = 1 h
   Débit liquide (ml/min) = 5, 7,5 puis 10
   Gaz = azote
   Débit de fluidisation (m³/h) = 2
imprégnation:
   Temps d'imprégnation (min) = 43
   Débit liquide (ml/min) = 10
   Gaz = azote
   Température du lit fluidisé (°C) = 25
   Débit de fluidisation (m³/h) = 2
   Décomposition
   Réacteur = lit fluidisé
   Gaz = dihydrogène
   Débit dihydrogène (m³/h) = 3
   Temps (h) = 4
   Température (°C) = 80

### Exemple 2 : [Pd(dba)₂]= [Pd(C₁₇H₁₄O)₃] % Pd/SiO₂ = 0,5 %

Cet exemple vise la préparation d'un matériau à 0,5%Pd/SiO₂ à partir du précurseur [Pd(C₁₇H₁₄O)₃]. Les grains de support sont en silice microporeuse de granulométrie 100-250 µm, de densité apparente 0,81 g/l, de densité solide 2,08g/l, de microporosité 47%, de diamètre des pores 70 angströms et de surface spécifique 300m²/g. Le gaz vecteur est l'azote et le gaz réducteur du dihydrogène. Les différents paramètres sont ajustés comme suit :
Détails techniques :
Support :
   SiO₂
   Masse de support (g) = 276,6
   Taille des particules de support (µm) =100-200
Précurseur métallique :
   [Pd(C₁₇H₁₄O)3]
   Masse de précurseur (g) = 6,45
   Solvant = THF
   Volume de solvant (ml) = 1000
   Masse de solvant (g) = 880
Alimentation en solvant :
   Temps (h) = 1 h45
   Débit liquide (ml/min) = 6,8 puis 10
   Gaz = azote
   Débit de fluidisation (m³/h) = 2
Imprégnation:
   Temps d'imprégnation(h) = 1 h40
   Débit liquide (ml/min) = 10
   Gaz = azote
   Température du lit fluidisé (°C) = 25
   Débit de fluidisation (m³/h) = 2
   Décomposition
   Réacteur = lit fluidisé
   Gaz = dihydrogène
   Débit dihydrogène (m³/h) = 3
   Temps (h) = 5
   Température (°C) = 80

### Exemple 3 : [Pd(acac)₂]= [Pd(C₅H₅O₂)₂] % Pd/SiO₂ = 0,5 %

Cet exemple vise la préparation d'un matériau à 0,5%Pd/SiO₂ à partir du précurseur [Pd(C₅H₅O₂)₂]. Les grains de support sont en silice microporeuse de granulométrie 100-250 µm, de densité apparente 0,81 g/l, de densité solide 2,08g/l, de microporosité 47%, de diamètre des pores 70 angströms et de surface spécifique 300m²/g. Le gaz vecteur est l'azote et le gaz réducteur du dihydrogène. Les différents paramètres sont ajustés comme suit :
Détails techniques :
Support :
   SiO₂
   Masse de support (g) = 253
   Taille des particules de support (µm) = 100-200
Précurseur métallique :
   [Pd(C₅H₅O₂)₂]
   Masse de précurseur (g) = 4,29
   Solvant = THF
   Volume de solvant (ml) = 1000
   Masse de solvant (g) = 880
Alimentation en solvant :
   Temps (h) = 1 h30
   Débit liquide (ml/min) = 6,8 puis 10
   Gaz = azote
   Débit de fluidisation (m³/h) = 2
Imprégnation:
   Temps d'imprégnation(h) = 1 h40
   Débit liquide (ml/min) = 10
   Gaz = azote
   Température du lit fluidisé (°C) = 25
   Débit de fluidisation (m³/h) = 2
   Décomposition
   Réacteur = lit fluidisé
   Gaz = dihydrogène
   Débit dihydrogène (m³/h) = 3
   Temps (h) = 3
   Température (°C) = 80

### Tests Catalytiques :

Certaines nanoparticules métalliques supportées décrites dans cette invention se sont relevées être des catalyseurs très actifs. Ainsi, les activités de catalyseurs SiO₂/Ni préparés par imprégnation de la silice à partir du précurseur Ni(cod)₂ aux taux massiques de Ni par rapport à la silice de 0,5 et 0,1 % ont été évalués. Ces matériaux ont été testés dans la réaction d'hydrogénation du hex-1-ène en hexane selon les conditions suivantes :
rapport substrat/catalyseur = 500
0,5 ml de 1-hexène dans 5ml de THF
température de réaction = 80°C
durée de réaction = 4h
activité =T.F.(h⁻¹) (nombre de moles d'hexane/nombre de moles de métal/temps de réaction)

Les taux de conversion du hex-1-ène en hexane obtenus pour les catalyseurs SiO₂ /Ni 0,5% et 0,1% préparés en lit fluidisé sont respectivement de 99 et 17% avec comme activités respectives 111,3h⁻¹ et 19,1h⁻¹.

Pour comparaison, un catalyseur SiO₂/Ni ayant une teneur en Ni de 5% a été préparé à partir du précurseur Ni(NO₃)₂ par imprégnation en lit fluidisé. Dans ce cas, un traitement sous dihydrogène à 500°C est nécessaire pour induire la formation de nickel métal. Ce catalyseur a conduit dans les mêmes conditions opératoires que celles décrites précédemment, à un taux de conversion du hex-1-ène en hexane de 90% avec une activité de 101,1 h⁻¹. Par conséquent, il apparaît que le catalyseur préparé à partir du précurseur Ni(cod)₂ est plus efficace que celui préparé à partir du précurseur Ni(NO₃)₂.

De même, des catalyseurs à base de palladium préparés par imprégnation de la silice à partir des précurseurs Pd(acac)₂ et Pd(dba)₂ au Pd par rapport à la silice de 0,5 et 0,1% ont été évalués en hydrogénation du hex-1-ène en hexane, dans les mêmes conditions que celles précédemment décrites. Les taux de conversion sont dans tous les cas de 100%.

La présente invention ne se limite pas aux exemples de réalisation donnés ci-dessus à titre d'exemples non limitatifs. Elle concerne au contraire toutes les variantes de réalisation à la portée de l'homme du métier dans le cadre des revendications ci-après.

## Revendications

1. Procédé de préparation de nanoparticules supportées, **caractérisé en ce qu'**il comporte les étapes suivantes :
- introduction dans un solvant adéquat d'un complexe de coordination métallique apte à se décomposer à une température inférieure à 200°C avec présence éventuelle d'un gaz réactif sous pression de gaz réactif inférieure à 3 bars,
- pulvérisation de la préparation ainsi obtenue dans des conditions propres à éviter sa décomposition dans un lit fluidisé contenant des grains de support poreux mis en suspension par un courant gazeux, puis
- décomposition du complexe de coordination métallique en présence éventuelle d'un gaz réactif.

2. Procédé selon la revendication 1, **caractérisé en ce que** le solvant est choisi de telle sorte que le complexe de coordination métallique soit soluble dans ce solvant.

3. Procédé selon l'une des revendications 1 ou 2, **caractérisé en ce que** la température de décomposition du complexe de coordination métallique est inférieure à 80°C.

4. Procédé selon l'une des revendications 1 à 3, **caractérisé en ce que** la pulvérisation de la préparation à l'intérieur du lit fluidisé est une pulvérisation pneumatique réalisée par un courant de gaz vecteur.

5. Procédé selon la revendication 4, **caractérisé en ce que** le gaz utilisé pour la pulvérisation pneumatique est choisi dans l'ensemble des gaz neutres tels l'azote et l'argon.

6. Procédé selon l'une des revendications 1 à 5, **caractérisé en ce que** le gaz réactif est choisi dans l'ensemble comprenant l'hydrogène (H₂) et le monoxyde de carbone (CO).

7. Procédé selon l'une des revendications 1 à 6, **caractérisé en ce que** deux complexes de coordination métallique sont introduits au départ dans un solvant.

8. Procédé selon l'une des revendications 1 à 7, **caractérisé en ce qu'**il est mis en oeuvre dans un même appareil.

9. Procédé selon l'une des revendications 1 à 8, **caractérisé en ce qu'**il est mis en oeuvre en continu.

10. Procédé selon l'une des revendications 1 à 9, **caractérisé en ce que** le complexe de coordination métallique est choisi dans l'ensemble non exhaustif comprenant les :
tris(dibenzylidèneacétone)diplatine (o),
tris(dibenzylidèneacétone)dipalladium (o)
bis(acétylacétonate)palladium (II)
bis(1,5-cyclooctadiène)nickel (o)
bis(acétylacétonate)nickel (II)
(1,3-cyctooctényle)(1,5-cyclooctadiène)cobalt (I)
pentacarbonyle fer(o)
(1,5-cyclooctadiène)(1,3,5-cyclooctatriène)ruthénium (o)
(acétylacétonate)(1,5-cyclooctadiène)rhodium (I)
bis(méthoxy)bis(1,5-cyclooctadiène)diiridium (I)
(cyclopentadiényle)(tertiobutylisonitrile)cuivre (I)
bis(diméthylamidure)diétain (II)
chloro(tétrahydrothiophène)or (I)
cyclopentadiènyle indium (I).

## Patentansprüche

1. Verfahren zur Herstellung von Nanopartikeln mit Trägerwerkstoff, **dadurch gekennzeichnet, dass** es die folgenden Schritte umfasst:
- Einbringung eines bei einer Temperatur von unter 200°C zersetzbaren Metallkoordinationskomplexes in ein geeignetes Lösungsmittel, gegebenenfalls in Anwesenheit eines reaktiven Gases bei einem Druck des reaktiven Gases von unter 3 bar,
- Zerstäubung der so erhaltenen Zubereitung unter geeigneten Bedingungen zur Verhinderung der Zersetzung derselben, in einem Fließbett enthaltend mittels eines Gasstroms in Suspension gehaltene poröse Trägerkörner, und
- Zersetzung des Metallkoordinationskomplexes, gegebenenfalls in Anwesenheit eines reaktiven Gases.

2. Verfahren nach Anspruch 1, **dadurch gekennzeichnet, dass** das Lösungsmittel so gewählt ist, dass der Metallkoordinationskomplex in diesem Lösungsmittel löslich ist.

3. Verfahren nach einem der Ansprüche 1 oder 2, **dadurch gekennzeichnet, dass** die Zersetzungstemperatur des Metallkoordinationskomplexes unter 80°C liegt.

4. Verfahren nach einem der Ansprüche 1 bis 3, **dadurch gekennzeichnet, dass** die Zerstäubung der Zubereitung im Fließbett eine pneumatische Zerstäubung ist, die mit Hilfe eines Trägergasstroms durchgeführt wird.

5. Verfahren nach Anspruch 4, **dadurch gekennzeichnet, dass** das für die pneumatische Zerstäubung verwendete Trägergas aus der Gruppe der neutralen Gase wie Stickstoff und Argon ausgewählt ist.

6. Verfahren nach einem der Ansprüche 1 bis 5, **dadurch gekennzeichnet, dass** das reaktive Gas ausgewählt ist aus der Gruppe umfassend Wasserstoff (H₂) und Kohlenmonoxid (CO).

7. Verfahren nach einem der Ansprüche 1 bis 6, **dadurch gekennzeichnet, dass** zu Beginn zwei Metallkoordinationskomplexe in ein Lösungsmittel eingebracht werden.

8. Verfahren nach einem der Ansprüche 1 bis 7, **dadurch gekennzeichnet, dass** es in ein- und derselben Vorrichtung durchgeführt wird.

9. Verfahren nach einem der Ansprüche 1 bis 8, **dadurch gekennzeichnet, dass** es kontinuierlich durchgeführt wird.

10. Verfahren nach einem der Ansprüche 1 bis 9, **dadurch gekennzeichnet, dass** der Metallkoordinationskomplex ausgewählt ist aus der nicht vollständigen Gruppe umfassend:
Tris(dibenzylidenaceton)diplatin (o),
Tris(dibenzylidenaceton)dipalladium (o),
Bis(acetylacetonat)palladium (II),
Bis(1,5-cyclooctadien)nickel (o),
Bis(acetylacetonat)nickel (II),
(1,3-Cyclooctenyl)(1,5-cyclooctadien)kobalt (I),
Pentacarbonyleisen (o),
(1,5-Cyclooctadien)(1,3,5-cyclooctatrien)ruthenium (o),
(Acetylacetonat)(1,5-cyclooctadien)rhodium (I),
Bis(methoxy)bis(1,5-cyclooctadien)diiridium (I),
(Cyclopentadienyl)(tert.butylisonitril)kupfer (I),
Bis(dimethylamid)dizinn,
Chlor(tetrahydrothiophen)gold (I),
Cyclopentadienylindium (I).

## Claims

1. Method for preparation of supported nanoparticles, **characterized in that** it has the following steps:
- introduction into an adequate solvent of a metallic coordination complex able to be decomposed at a temperature below 200°C with the possible presence of a reactive gas at a reactive gas pressure lower than 3 bars,
- spraying of the preparation thus obtained under conditions suitable to avoid its decomposition in a fluidized bed containing porous support grains placed in suspension by a gaseous current, then
- decomposition of the metallic coordination complex in the possible presence of a reactive gas.

2. Method according to claim 1, **characterized in that** the solvent is chosen in such a manner that the metallic coordination complex is soluble in this solvent.

3. Method according to one of claims 1 or 2, **characterized in that** the decomposition temperature of the metallic coordination complex is below 80°C.

4. Method according to one of claims 1 to 3, **characterized in that** the spraying of the preparation at the interior of the fluidized bed is a pneumatic spraying carried out by a current of vector gas.

5. Method according to claim 4, **characterized in that** the gas utilized for the pneumatic spraying is chosen from the group of neutral gases such as nitrogen and argon.

6. Method according to one of claims 1 to 5, **characterized in that** the reactive gas is chosen from the group comprising hydrogen (H₂) and carbon monoxide (CO).

7. Method according to one of claims 1 to 6, **characterized in that** two metallic coordination complexes are introduced at the start in a solvent.

8. Method according to one of claims 1 to 7, **characterized in that** it is carried out in a single apparatus

9. Method according to one of claims 1 to 8, **characterized in that** it is carried out continuously.

10. Method according to one of claims 1 to 9, **characterized in that** the metallic coordination complex is chosen from the non-exhaustive group comprising:
tris(dibenzylideneacetone)diplatinum(0)
tris(dibenzylideneacetone)dipalladium(0)
bis(acetylacetonate)palladium(II)
bis(1,5-cyclooctadiene)nickel(0)
bis(acetylacetonate)nickel(II)
(1,3-cyclooctenyl)(1,5-cyclooctadiene)cobalt(I)
pentacarbonyl iron(0)
(1,5-cyclooctadiene)(1,3,5-cyclooctatriene)ruthenium(0)
(acetylacetonate)(1,5-cyclooctadiene)rhodium(I)
bis(methoxy)bis(1,5-cyclooctadiene)diiridium(I)
(cyclopentadienyl)(tertbutylisonitrile)copper(I)
bis(dimethylamidide)ditin(II)
chloro(tetrahydrothiophene)gold(I)
cyclopentadienyl indium(I).
